Europäisches Patentamt

(19) European Patent Office

Office européen des brevets

(11) Publication number: **0 121 413**
**B1**

(12) # EUROPEAN PATENT SPECIFICATION

(45) Date of publication of the patent specification:
**27.08.86**

(51) Int. Cl.⁴: **B 25 J 17/02**

(21) Application number: **84302125.4**

(22) Date of filing: **28.03.84**

(54) **Multi-joint arm robot apparatus.**

(30) Priority: **29.03.83 JP 51445/83**

(43) Date of publication of application:
**10.10.84 Bulletin 84/41**

(45) Publication of the grant of the patent:
**27.08.86 Bulletin 86/35**

(84) Designated Contracting States:
**DE FR GB**

(56) References cited:
**EP - A - 0 077 609**
**EP - A - 0 108 549**
**DE - A - 3 034 912**

(73) Proprietor: **Kabushiki Kaisha Toshiba, 72, Horikawa-cho Saiwai-ku, Kawasaki-shi Kanagawa-ken 210 (JP)**

(72) Inventor: **Obama, Masao,
905 Life-Core-Kurihama 3-15-2, Negishi-cho,
Yokosuka-shi Kanagawa-ken (JP)**
Inventor: **Asano, Kuniji, 2843-5, Nozuta-machi,
Machida-shi Tokyo (JP)**

(74) Representative: **Freed, Arthur Woolf et al, MARKS & CLERK 57-60 Lincoln's Inn Fields, London WC2A 3LS (GB)**

## Description

The present invention relates to a multi-joint arm robot apparatus.

Circumstances in facilities such as nuclear reactor, fusion reactor and nuclear fuel reprocessing plant are harmful to human being and works under these circumstances are therefore usually done using a manipulator. Demand for a manipulator capable of more complicated movement has arisen these days and a multi-joint arm robot apparatus which has a higher degree of freedom in movement has been developed to meet the demand.

Such a multi-joint arm robot apparatus is disclosed in European Patent Applications EP-A-77 609 filed September 16, 1982, and EP-A-108 549 filed October 25, 1983, both applications being assigned to the same assignee as this application. These applications fall within the terms of Article 54, paragraph 3 of the EPC. According to the multi-joint arm robot, a plurality of unit arms are connected in tandem through joints, and the proximal unit arm is fixed to a supporting table movable on a rail. The multi-joint arm robot apparatus further includes motors for driving each of the joints to change its angle, a motor for moving the supporting table, and a control device with a computer to drive these motors. The control device moves the multi-joint arm on a desired path, while controlling the moving amount of the supporting table and the angle of each of the joints.

The multi-joint arm robot apparatus thus arranged is large in size as a whole and occupies a relatively large space even when it is not under checking work. It is also very uneconomical that the multi-joint arm robot apparatus is installed everywhere the checking work is needed. It is therefore strongly desired to provide a multi-joint arm robot apparatus which can be easily moved to any place.

An object of the present invention is to provide a multi-joint arm robot apparatus which occupies a smaller space.

Another object of the present invention is to provide a multi-joint arm robot apparatus capable of being easily moved to a working site.

These objects of the present invention can be achieved by supporting the proximal and of a multi-joint arm on a rotating member by means of a supporting joint. According to the present invention, a means for moving the rotating member up and down can also be provided. In addition, the rotating member can be mounted on a moving vehicle.

This invention can be more fully understood from the following detailed description when taken in conjunction with the accompanying drawings, in which:

Fig. 1 is a schematic side view of multi-joint arm robot apparatus embodying the present invention;

Fig. 2 is a view for explaining the driving mechanism for a rotating drum of in Fig. 1;

Fig. 3 is a perspective view of a multi-joint arm;

Fig. 4 shows an example of checking section provided in the foremost end of the multi-joint arm;

Fig. 5 shows a mechanism for supporting the proximal end of the multi-joint arm onto the rotating drum;

Figs. 6 and 7 are views for explaining the operation of the multi-joint arm robot apparatus according to the present invention;

Fig. 8 shows a control system for the multi-joint arm robot apparatus;

Fig. 9 is a block diagram useful in understanding of the operation of the control system;

Fig. 10 shows another example of multi-joint arm robot apparatus according to the present invention;

Fig. 11 is a view for explaining a driving mechanism which is employed in the embodiment shown in Fig. 10;

Fig. 12 is a view for explaining the operation of the embodiment of Fig. 10; and

Figs. 13 and 14 show further examples of multi-joint arm robot apparatus according to the present invention.

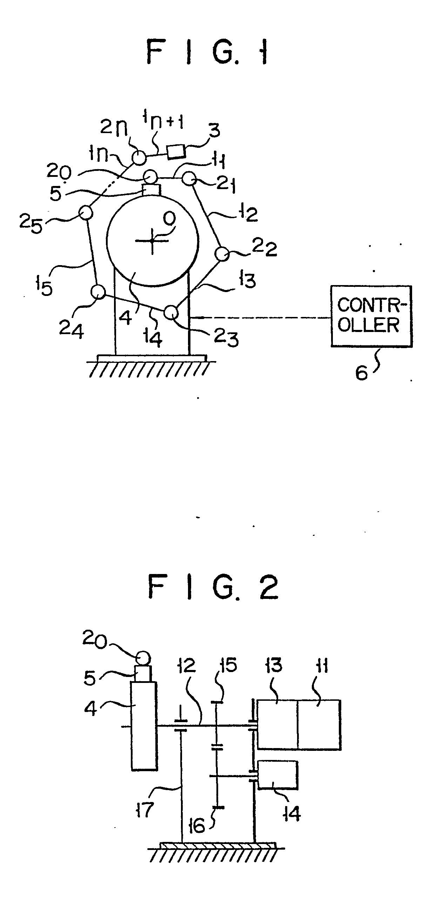

As shown in Fig. 1, a multi-joint arm robot apparatus according to the present invention comprises a multi-joint arm 1 provided with an inspection checking section 3 at the foremost end thereof, the section having a TV camera and a hand-like member to do a simple work, a rotating member 4 like a rotating drum or shaft, a supporting member 5 fixed to the rotating member 4 to support the proximal end of the multi-joint arm 1, and a control device 6 for controlling the rotating member 4 and the multi-joint arm 1. In the multi-joint arm 1, a plurality of unit arms $1_1$ to $1_{n+1}$ are connected in tandem through joints $2_1$ to $2_n$. Each of the joints is arranged to have two degrees of freedom in movement, and due to these joints, the multi-joint arm 1 has so a high degree of freedom in movement as to take a very complicated posture. The proximal unit arm $1_1$ of the multi-joint arm 1 is supported by the supporting member 5 through a supporting joint $2_0$. The supporting joint $2_0$ has one degree of freedom in movement and its rotation angle ranges from $90°$ to $180°$. When the unit arm $1_1$ is parallel to the floor on which the robot apparatus is installed, as shown in Fig. 1, it is deemed that the rotation angle of the supporting joint $2_0$ is $90°$, and when the unit arm $1_1$ is vertical to the floor, it is deemed that the rotation angle of the supporting joint $2_0$ is $180°$. Motors are provided to drive the joints $2_1$ to $2_n$ and the rotating member 4. The control device 6 drives these motors to move the multi-joint arm 1 along a desired path, while controlling the rotation angle of the rotating member 4 and joint angles of the joints $2_1$ to $2_n$.

The rotating drum 4 is rotatingly driven by a motor 11 through a driving shaft 12 and a speed reducer 13. The rotation angle of the rotating drum 4 is detected by a rotation angle detector 14 such as a potentiometer or encoder connected to the driving shaft 12 via toothed wheels 15 and 16 in a frame 17.

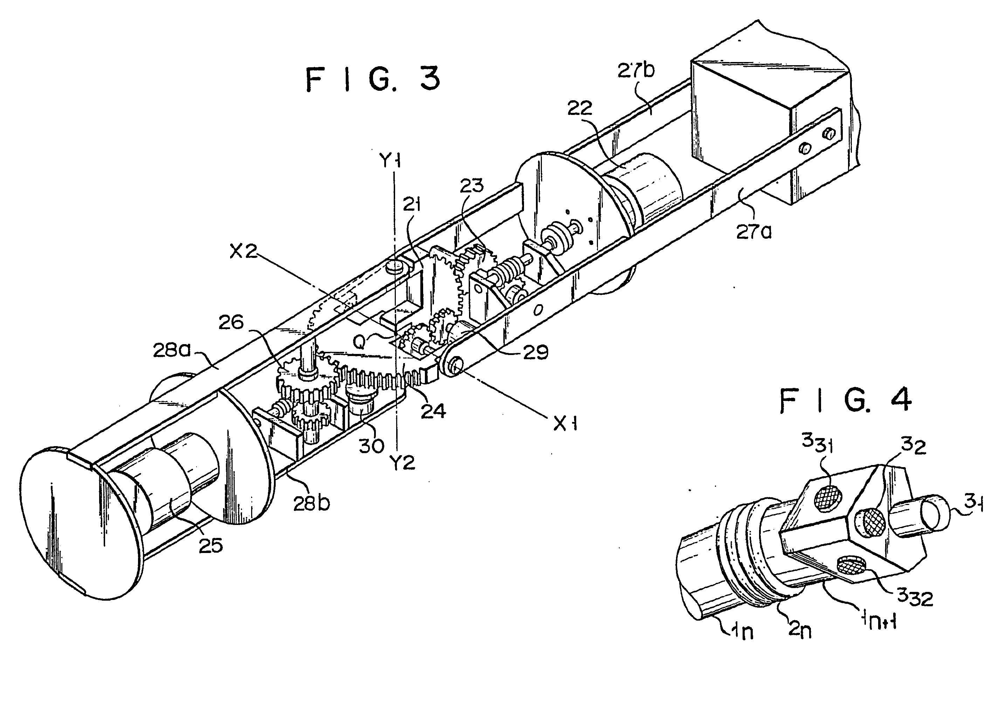

The multi-joint arm 1 may be constructed as disclosed in the already-cited European Patent Applications and also as shown in Fig. 3. A first main gear 21 having a rotation axis in a direction X-X' is provided which is driven by a motor 22 through a driving gear 23. A second main gear 24 having a rotation axis in a direction Y-Y' is provided which is driven by a motor 25 through a driving gear 26. The first and second main gears 21 and 24 are connected with each other in such a way that they can rotate around their respective rotation axes. The driving gear 23 and the motor 22 are attached integral to first arm members 27a and 27b freely rotatable taking the axis X-X' as their fulcrum. The second driving gear 26 and the motor 25 are attached integral to the second arm members 28a and 28b which can freely rotate around the axis Y-Y'. When the motor 22 is energized to rotate the driving gear 23, therefore, the first arm members 27a and 27b rotate around the axis X-X' in relation to the second arm members 28a and 28b, while when the motor 25 is energized to rotate the driving gear 26, the second arm members 28a and 28b rotate around the axis Y-Y' in relation to the first arm members 27a and 17b. By controlling the rotations in the directions X-X' and Y-Y', the second arm members 28a and 28b are allowed to freely move within a solid angle relatively to the first arm members 27a and 27b. Reference numerals 29 and 30 represent potentiometers for detecting rotation angles of the motors 22 and 25, or rotation angle of the joint. Though not shown, contact sensors such as proximity switches are arranged at each of both ends of the unit arm to detect any contact with an obstacle in four directions. Each unit arm is covered with a suitable material. Each of the joints is covered by a flexible bellows-like material so as to enable its free movement.

As shown in Fig. 4, the inspection checking section 3 includes a TV camera $3_1$, a range finder $R_2$ for measuring the distance to an obstacle located forward, and range finders $3_{31}$, $3_{32}$ and $3_{33}$ arranged in three side directions to measure distances to obstacles located in side directions. Though not shown, a hand-like means can also be arranged to do a simple work by a remote control.

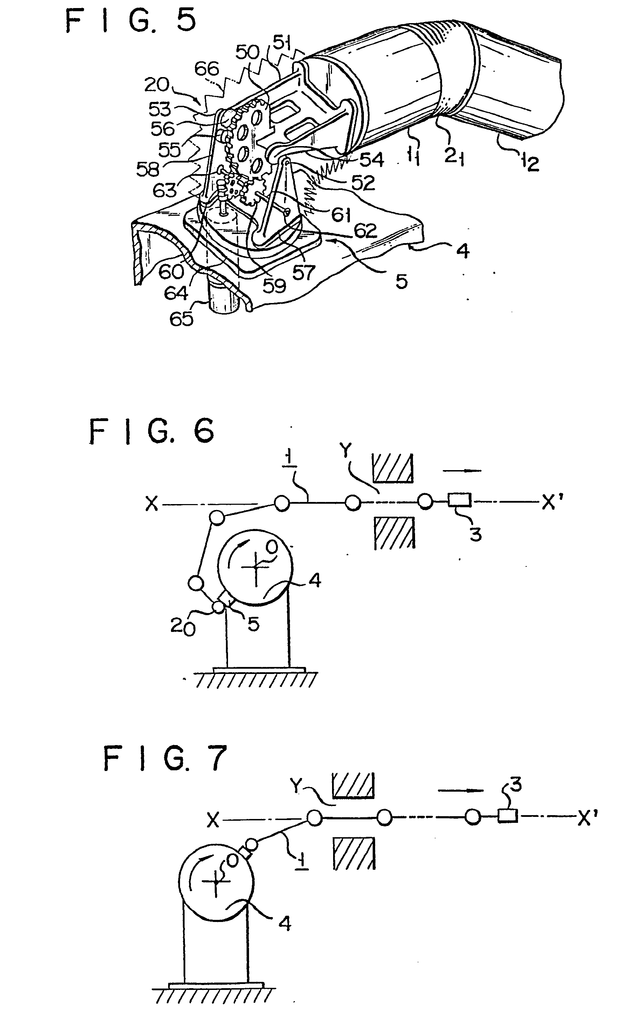

The arrangement of the supporting joint 20 will be described referring to Fig. 5. A semicircular gear support 51, to the foremost end of which a semicircular gear 50 is fixed, is attached to an end of the unit arm $1_1$. Joint shafts 52 and 53, coaxial to the center of the semicircular gear 50, are arranged at left and right sides 51. A semicircular limit plate 54 is fixed to the joint shaft 52 while an angle detecting gear 56 engaged with a potentiometer 55 is fixed to the joint shaft 53. The joint shafts 52 and 53 are supported in bearings of supports 57 and 58 arranged on the supporting member 5 which is fixed to the rotating member 4. Bearings 62 and 63 are provided in the supports 57 and 58, respectively, which receive a driving shaft 61, which supports a joint driving gear 59 engaged with the semicircular gear 50, and a worm gear 60 which rotates the joint driving gear 59. The worm gear 60 is driven by a driving motor 64 to which a brake means 65 is coupled. Though not shown, the limiter is arranged inside the support 57 to prevent the semicircular plate 54 from rotating more than a predetermined angle (or 90°). The support joint $2_0$ is covered by a bellows-like material 66. As apparent from the above, the joint $2_0$ has one degree of freedom in movement and its rotation angle is kept 90° or less. Its rotation angle is detected by the potentiometer 55 and used to control the multi-joint arm 1, as will be described later.

Fig. 1 shows the start condition of the multi-joint arm 1, in other words, the storage condition of the multi-joint arm 1 when it is not used. More specifically, when the multi-joint arm robot apparatus according to the present invention is not used, the multi-joint arm 1 is stored so as to wind around the rotating member 4.

In order to guide the inspection section 3 at the foremost end of the multi-joint arm 1 to a target, the control device 6 calculates, every time the rotating member 4 is rotared by a unit angle, the joint angles which allow the arm 1 to ride on a desired path, and drives the joint motors according to the calculated joint angles.

After inspection work, the control device 6 drives the joints $2_1$ to $2_n$ according to the joint angles, which have been calculated in the course of advance, while reversely rotating the rotating member 4, so that the multi-joint arm 1 can return to its start condition under which it is wound around the rotating member 4.

Figs. 6 and 7 show the multi-joint arm 1 advancing through an entrance Y in the direction X-X'. In order to advance the multi-joint arm 1 like this in the direction X-X', relative positional relation between the multi-joint arm 1 and the path X-X' is obtained according to arithmetric operation to control the angle of each of the joints $2_1$, $2_2$, . . . , $2_n$, while detecting the rotation angle of the drum 4 which is rotated clockwise. Therefore, providing that lengths of the unit arms $1_1$, $1_2$, . . . , $1_n$, $1_{n+1}$ are $\ell_1$, $\ell_2$, . . . , $\ell_n$, $\ell_{n+1}$, that bending angles of the joints $2_0$, $2_1$, $2_2$, . . . , $2_n$ are $\phi_0$, $\phi_1$, $\phi_2$, . . . , $\phi_n$, and that the rotation angle of the rotating drum 4 is $\theta$, the space position Q of the foremost end or inspection section 3 of the multi-joint arm 1 may be expressed as follows:

$$Q = f\ (\theta,\ \phi_0,\ \phi_1,\ \phi_2,\ .\ .\ .\ ,\ \phi_n,\ \ell_1,\ \ell_2,\ .\ .\ .\ ,\ \ell_n,\ \ell_{n+1})\quad (1)$$

Also providing that the positions of the joints $2_0$, $2_1$, $2_2$, . . . $2_n$ are $Q_0$, $Q_1$, $Q_2$, . . . , $Q_n$, they can be expressed as follows:

$$Q_0 = f_0\ (\theta)$$
$$Q_1 = f_1\ (\theta,\ \theta_0,\ \ell_1)$$
$$Q_2 = f_2\ (\theta,\ \theta_0,\ \theta_1,\ \ell_2)$$
$$.$$
$$.\qquad\qquad\qquad\qquad\qquad\qquad (2)$$
$$.$$
$$Q_n = f_n\ (\theta,\ \theta_0,\ \theta_1,\ .\ .\ .\ ,\ \theta_{n-1},\ \ell_1,\ \ell_2,\ .\ .\ .\ ,\ \theta_n)$$

Positions of the foremost end of the multi-joint arm and of each of the joints can be obtained from equations (1) and (2), and $\theta$, $\theta_0$, $\theta_1$, . . . , $\theta_n$ can also be obtained from equations (1) and (2) when the position of each of the joints is known.

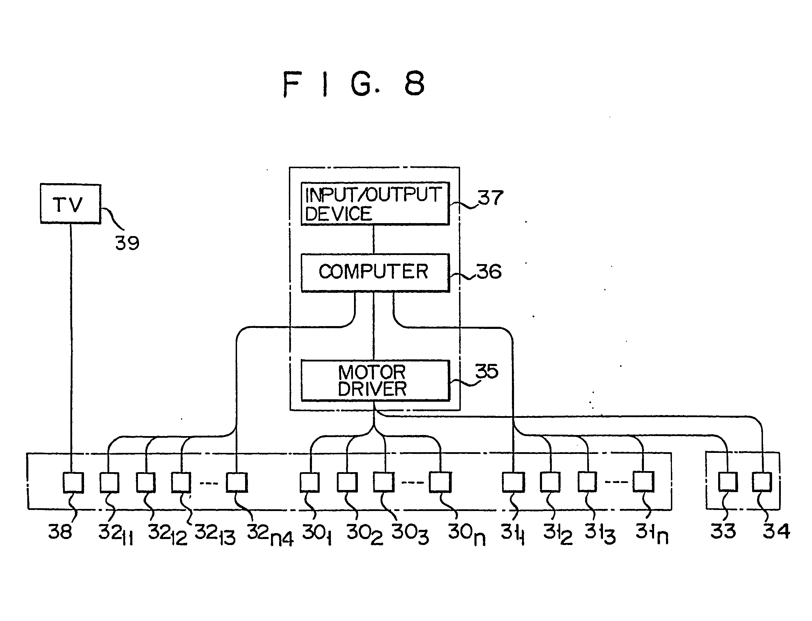

A computer is usually employed to calculate and control the positions of the foremost end and the joints the multi-joint arm. The control device 6 using a computer is arranged as shown in Fig. 8. Numerals $30_1$ to $30_n$ represent motors for driving the joints $2_1$ to $2_n$ of the multi-joint arm 1, $31_1$ to $31_n$ encoders for measuring the rotation angles of the joints, and $32_{11}$ to $32_{n4}$ contact sensors attached to the unit arms $1_1$ to $1_n$. Numeral 33 represents a motor for rotating the rotating durm 4, 34 an encoder for measuring the rotation amount of the motor 33, 35 a motor driving circuit, 36 a computer, 37 an input and output device, 38 a television camera provided at the inspection section 3, and 39 a television monitor.

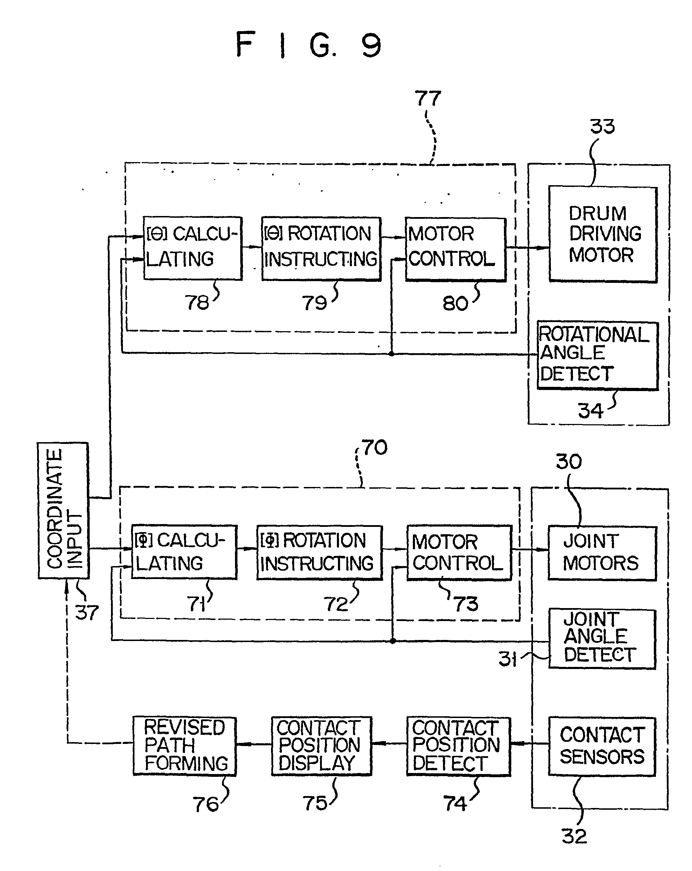

The control device can also be rewritten as shown in Fig. 9 for better understanding of its operation. The coordinate values of n dividing points on the path along which the multi-joint arm is guided to a target are applied to a joint control means 70 through the input means 37. The joint control means 70 includes a $\theta$ calculating means 71 for calculating the angle $\theta$ of each of the joints on the basis of the joint coordinate values, a $\phi$ rotation instructing means 72 for instructing the calculated joint angle to each of the joints, and a motor controlling means 73 for controlling the joint driving motors 30 in response to the rotation instructions. During operation, the joint angles are detected by the joint angle detector means 31 and fed back to the $\theta$ calculating means 71 and the motor controlling means 73. The contact detector means 32 arranged at each of the unit arms is connected to a contact position detector means 74 to detect what part of the multi-joint arm is contacted with an obstacle, and the contact position is then visually displayed on a display means 75. After this display of contact position, a new path in which the multi-joint arm is not contacted with the obstacle is produced by a revised path forming means 76 and the coordinate values of new dividing points on the path are applied to the input means 37.

The drum driving motor 33 is controlled by a drum control means 77, which comprises a $\theta$ calculating means 78 for calculating the rotation angle $\theta$ of the rotating drum on the basis of position signals applied from the input means 37, a $\theta$ rotation instructing means 79 for instructing the calculated rotation angle $\theta$, and a motor control means 80 for controlling the drum driving motor 33 in response to the $\theta$ rotation angle instruction. Rotation angles of the drum driving motor 33 are detected by the detector means 34 and fed back to the $\theta$ calculating means 78 and the motor control means 80.

According to the present invention, the multi-joint arm robot apparatus can be carried with its multi-joint arm wound around the rotating drum, and the arm can be extended at working site, as described above. Therefore, the apparatus can be easily carried, and needs no wide place at working site.

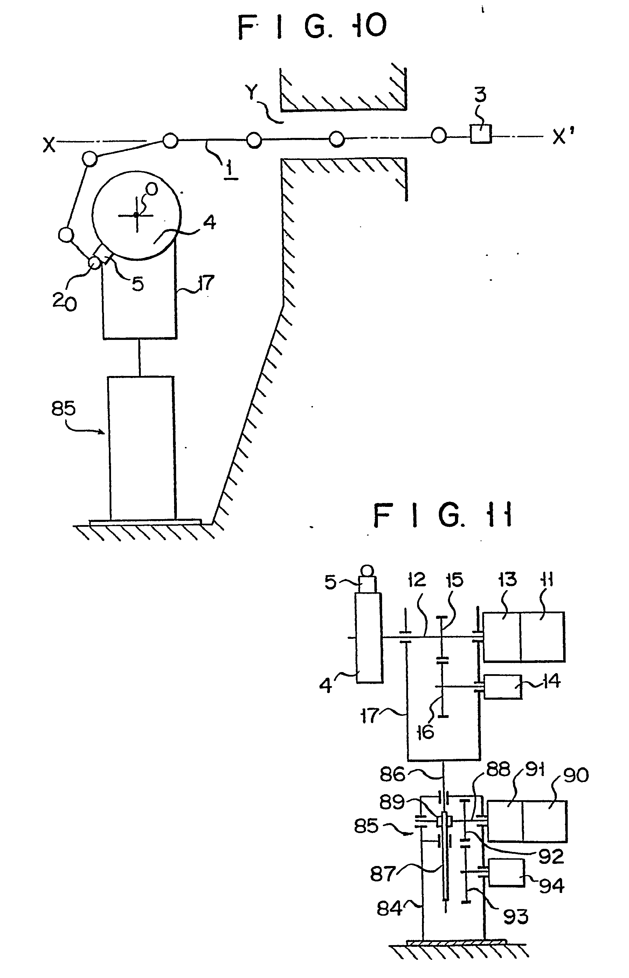

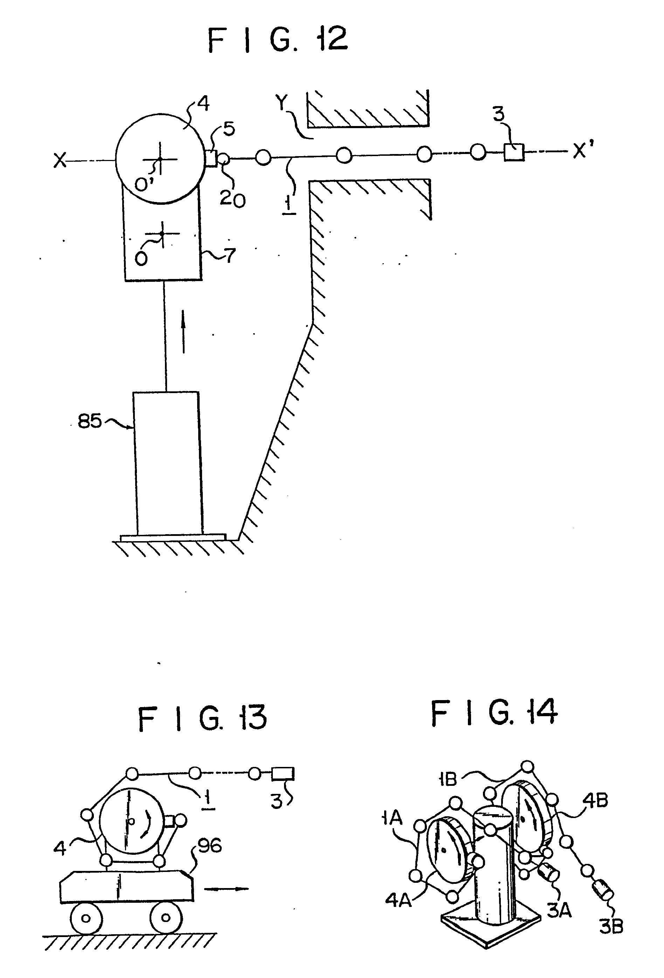

Another embodiment of the present invention will be described. When the entrance Y through which the multi-joint arm is guided to a target to be inspected is not same in height as the center position of rotation of the rotating drum 4, that length of the multi-joint arm which can be used is reduced in the case of the first embodiment according to the present invention. As shown in Fig. 10, therefore, a lift means 85 for lifting up and down the multi-joint arm robot apparatus itself including the multi-joint arm 1 and the frame 17 for supporting the drum 4 is provided to allow the multi-joint arm 1 to be used to maximum. As shown in Fig. 11 in which the same parts as those in the first embodiment is represented by the means reference numerals, the lift means 85 comprises a shaft 86 which supports the frame 17 from underside and is lifted up and down through a bearing arranged at a frame 84, a rack 87 fixed to the shaft 86, a pinion 89 engaged with the rack 87 and supported by a driving shaft 88, a lifting motor 90 connected to the driving shaft 88 through a speed reducer 91 so as to drive the driving shaft 88, and a position detector 94 including a potentiometer or encoder to detect up- or down-movement of the drum 4 through gears 92 and 93 which are supported by the driving shaft 88.

The lift means 85 thus arranged transmits the rotation of the motor 90 to the pinion 89 through the speed reducer 91 to lift the rack 87 up or down, thereby lifting the drum 4 up or down. On the other hand, the amount of rotation of the pinion 89 is transmitted to the position detector 94 through the gears 92 and 93, and detected as the amount of up or down of the rack 87.

When the position of the rotating drum 4 is thus detected in the vertical direction the multi-joint arm robot apparatus can be lifted from the center 0 to another center 0' of the rotating drum 4 to allow the multi-joint arm 1 to be extended to maximum in the direction X-X', as shown in Fig. 12.

Fig. 13 shows a further embodiment of the present invention in which the multi-joint arm robot apparatus is mounted on a vehicle 96 to enhance its mobility.

As shown in Fig. 14, it may be arranged so that plural rotating drums 4A and 4B with plural multi-joint arms 1A and 1B are provided to cause their arms 1A and 1B to cooprate each other at their foremost ends where inspection sections 3A and 3B are arranged.

## Claims

1. A multi-joint arm robot apparatus comprising: a multi-joint arm including a plurality of unit arms $(1_1$ to $1_{n+1})$, a plurality of joints $(2_1$ to $2_n)$ for connecting said unit arms in tandem with one another, first motor means (22, 25) for driving each of said joints to control a joint angle thereof, and first joint angle detector means (29, 30) for detecting the joint angle of each of said joints;

a rotating member (4);

a second motor means (11) for driving said rotating member;

a support joint $(2_0)$ having one end fixed to said rotating member and the other end fixed to the proximal unit arm $(1_1)$ of said-joint arm, said support joint being arranged so that its joint angle is variable during the operation of said multi-joint arm and said rotating member;

a second detector means (14) for detecting the joint angle of said support joint; and

a control means for driving said first and second motor means and controlling the rotation angles of said rotating member and the joint angle of each of said joints in response to said first and second angle detector means, so as to move said multi-joint arm along a path and wind said multi-joint arm around said rotating member.

2. A multi-joint arm robot apparatus according to claim 1, characterized in that each of said joints of said multi-joint arm has two degrees of freedom in movement, and said support joint has one degree of freedom in movement.

3. A multi-joint arm robot apparatus according to claim 2, characterized in that the joint angle of said support joint is about 90° or less, taking the normal of said rotating member as its reference.

4. A multi-joint arm robot apparatus according to claim 1, characterized by further including means (85) for lifting said rotating member up or down.

5. A multi-joint arm robot apparatus according to claim 1, characterized in that said rotating member (4) is mounted on a vehicle (96).

## Patentansprüche

1. Roboter (Arbeitsautomat) mit mehrgelenkigem Arm, umfassend (gekennzeichnet durch)

einen mehrgelenkigen Arm mit mehreren Armabschnitten ($1_1$ - $1_{n+1}$), mehreren Gelenken ($2_1$ - $2_n$) zum gegenseitigen Verbinden der Armabschnitte in Tandemanordnung, ersten Motoreinrichtungen (22, 25) zum Ansteuern jedes Gelenks zwecks Steuerung eines Auslenkwinkels desselben sowie ersten Auslenkwinkel-Detektoreinrichtungen (29, 30) zum Bestimmen des Auslenkwinkels jedes Gelenks,

ein drehendes Element (4)

eine zweite Motoreinrichtung (11) zum Antreiben oder Ansteuern des drehenden Elements,

ein Traggelenk ($2_0$), dessen eines Ende am drehenden Element befestigt und dessen anderes Ende mit dem proximalen Armabschnitt ($1_1$) des mehrgelenkigen Arms verbunden ist und das so angeordnet ist, dass sein Auslenkwinkel während des Betriebs des mehrgelenkigen Arms und des drehenden Elements variabel ist,

eine zweite Detektoreinrichtung (14) zum Bestimmen des Auslenkwinkels des Traggelenks und eine Steuereinrichtung zum Ansteuern der ersten und zweiten Motoreinrichtungen und zum Steuern der Drehwinkel des drehenden Elements sowie des Auslenkwinkels jedes Gelenks nach Massgabe der ersten und zweiten Winkel-Detektoreinrichtungen, um den mehrgelenkigen Arm längs einer Bahn oder Strecke zu bewegen und ihn um das drehende Element herumzuwickeln.

2. Roboter mit mehrgelenkigem Arm nach Anspruch 1, dadurch gekennzeichnet, dass jedes Gelenk des mehrgelenkigen Arms zwei Freiheitsgrade der Bewegung aufweist und das Traggelenk einen Freiheitsgrad der Bewegung aufweist.

3. Roboter mit mehrgelenkigem Arm nach Anspruch 2, dadurch gekennzeichnet, dass der Auslenkwinkel des Traggelenks, bezogen auf die Normale des drehenden Elements, 90° oder weniger beträgt.

4. Roboter mit mehrgelenkigem Arm nach Anspruch 1, dadurch gekennzeichnet, dass weiterhin eine Einrichtung (85) zum Aufwärts- oder Abwärtsbewegen des drehenden Elements vorgesehen ist.

5. Roboter mit mehrgelenkigem Arm nach Anspruch 1, dadurch gekennzeichnet, dass das drehende Element (4) auf einem Fahrzeug (96) montiert ist.

## Revendications

1. Appareil formant robot à bras à plusieurs articulations, comprenant

un bras à plusieurs articulations comprenant plusieurs bras élémentaires ($1_1$ à $1_{n+1}$), plusieurs articulations ($2_1$ à $2_n$) destinées à raccorder les bras élémentaires en tandem les uns avec les autres, un premier moteur (22, 25) destiné à entraîner chaque articulation afin que l'angle de l'articulation soit réglé, et un premier détecteur d'angle d'articulation (29, 30) destiné à détecter l'angle de chacune des articulations,

un organe rotatif (4),

un second moteur (11) destiné à entraîner l'organe rotatif,

une articulation de support ($2_0$) ayant une première extrémité fixée à l'organe rotatif et son autre extrémité fixée au bras élémentaire interne ($1_1$) du bras à plusieurs articulations, l'articulation de support étant disposée de manière que son angle d'articulation soit variable pendant le fonctionnement du bras à plusieurs articulations et de l'organe rotatif,

un second détecteur (14) destiné à détecter l'angle d'articulation de l'articulation de support, et

un dispositif de commande du premier et du second moteur et des angles de rotation de l'organe rotatif et de l'angle de chaque articulation en fonction du premier et du second détecteur d'angle, afin que le bras à plusieurs articulations soit déplacé suivant un trajet et soit enroulée autour de l'organe rotatif.

2. Appareil formant robot à bras à plusieurs articulations selon la revendication 1, caractérisé en ce que chacune des articulations du bras à plusieurs articulations a deux degrés de liberté de déplacement, et l'articulation de support a un seul degré de liberté de déplacement.

3. Appareil formant robot à bras à plusieurs articulations selon la revendication 1, caractérisé en ce que l'angle d'articulation de l'articulation de support est d'environ 90° ou moins, la perpendiculaire à l'organe rotatif constituant la référence.

4. Appareil formant robot à bras à plusieurs articulations selon la revendication 1, caractérisé en ce qu'il comprend en outre un dispositif (85) de déplacement de l'organe rotatif en direction verticale.

5. Apparail formant robot à bras à plusieurs articulations selon la revendication 1, caractérisé en ce que l'organe rotatif (4) monté sur un véhicule (96).

# F I G. 1

# F I G. 2

# F I G. 3

# F I G. 4

0 121 413

# F I G. 5

# F I G. 6

# F I G. 7

# F I G. 8

0 121 413

# F I G. 9

# F I G. 10

# F I G. 11

# F I G. 12

# F I G. 13

# F I G. 14

19